# EUROPEAN PATENT APPLICATION

(11) **EP 1 486 683 A1**
(43) Date of publication of application: **15.12.2004**
(21) Application number: 04102320.1
(22) Date of filing: 26.05.2004
(51) Int. Cl.: F16B 5/02

(54) **Adapter plate assembly**

(30) Priority: 28.05.2003 DE 10324506
(71) Applicant: Bosch Rexroth Teknik AB, 125 81 Stockholm (SE)
(72) Inventor: Widefelt, Johan, 112 28 Stockholm (SE)
(74) Representative: Kietzmann, Lutz

(57) **Abstract**

Adapter plate assembly especially for mounting machine parts (2a, 2b) onto one another, comprising:
- at least two adapter plates (1a, 1b) arranged opposite one to another for connecting said machine parts (2a, 2b), whereby an intermediate mounting gap (4) between said corresponding adapter plates (1a, 1b) is provided,
- at least one screw connecting means (5) accommodated in said intermediate mounting gap (4) for connecting said adapter plates (1a, 1b) onto one another, whereby said screw connecting means comprise:
   - a first crank block (6) corresponding to a pair of guide openings (7a, 7b) arranged opposite one to another on the adapter plates (1a, 1b) respectively, wherein the first crank block (6) is provided with a threaded through hole extending parallel to the mounting gap (4),
   - a second crank block (8) corresponding to a peripheral flange section (9) of the adapter plates (1a, 1b) respectively in a form fitted manner, wherein the second crank block (8) is provided with a through hole extending parallel to the mounting gap (4), and
   - a screw element (10) which extends through the through hole of the second crank block (8) and which is screwed in the threaded through hole of the first crank block (6) in order to attach the machine parts (2a, 2b) onto one another.

## Description

### Field of the invention

The present invention relates to an adapter plate assembly, especially for mounting machine parts onto one another, comprising at least two adapter plates arranged opposite one to another for connecting said machine parts, whereby an intermediate mounting gap between said corresponding adapter plates is provided, at least one screw connecting means accommodated in said intermediate mounting gap for connecting said adapter plates onto one another.

### Description of related art

The product catalogue "Adapter kits for drives" (Festo AG & Co., Issue 2001, Bd.1 / 2.2-18ff and 2.2-47) discloses an adapter plate assembly of the above-mentioned kind which allows a combination of two machine parts, e.g. two pneumatic linear units, in order to build a materials handling system with several working axes.

The adaptor plate assembly comprises two rectangular shaped adapter plates. Each adapter plate is attached to a corresponding pneumatic linear unit by screws. Both adapter plates are provided with a dovetail-shaped portion for connecting the adapter plates onto one another. Therefore, screw connection means are arranged in a mounting gap between both adapter plates corresponding with the dovetail-shaped portion of the adapter plates. The screw connection means comprise several screws, centering disks, centering sleeves and slot nuts.

The known adapter plate assembly allows a fixed combination of two machine parts. The distance between the adjacent adapter plates is not adjustable. An adjustment is only possible along the direction of the corresponding dovetail-shaped portions of the adjacent adapter plates which limits the possible field of application. Since the number of single parts is relatively high the mounting process of the known adapter plate assembly is time-consuming in consideration of the limited use. Furthermore, the adapter plate assembly show a large thickness in the mounted state causes of the dovetail-shaped portions on both adjacent adapter plates.

It is an object of the present invention to provide an adapter plate assembly which features a wide field of application for flexibly mounting machine parts onto one another whereby a minimum number of single parts is needed.

### Summary of the invention

This object is achieved in the adapter plate assembly of claim 1. Thus the invention provides screw connecting means with a first crank block corresponding to a pair of guide openings arranged opposite one to another on the adapter plates respectively, wherein the first crank block is provided with a threaded through hole extending parallel to the mounting gap; a second crank block corresponding to a peripheral flange section of the adapter plates respectively in a form fitted manner, wherein the second crank block is provided with a through hole extending parallel to the mounting gap; and a screw element which extends through the through hole of the second crank block and which is screwed in the threaded through hole of the first crank block in order to attach the machine parts, especially pneumatic linear drives or pneumatic rotary drives, onto one another.

Thus it is possible to assembly and adjust machine parts with different offset angles and/or offset distances in an easy manner. The solution of the present invention features a wide field of application for mounting machine parts onto one another. The adapter plate assembly consists of two or more adapter plates that is used to assembly two machine parts one to another. Said adapter plates are assembled together with the special screw connecting means. In the simplest case only five single parts are sufficient. Of course the number of screw connecting means per adapter plate assembly can be increased, in order to increase the mechanical stability accordingly.

According to an advantageous embodiment, each adapter plate is provided with a prismatic shaped peripheral flange section which corresponds with two tail sections of the second crank block in order to press the adapter plates in the direction of the intermediate mounting gap when turning the screw element. Thus the thickness of the adapter plate assembly can be minimized. In order to define the desired distance between the adjacent adapter plates the first crank block is provided with the required thickness X. The thickness X of the first crank block(s) should be adapted to the space which is needed for the heads of the screws for attaching each adapter plate to the corresponding machine part. Preferably, these first crank blocks are available in various thicknesses in order to define various mounting distances between the adapter plates.

Advantageously, the adapter plates might be provided with a disk-like, round shape in order to adjust the offset angle relative to the adjacent machine parts. Alternatively, the adapter plates might be provided with a rectangular or square shape in order to adjust the offset distance of adjacent machine parts in one or two directions.

According to a further advantageous embodiment of the invention the corresponding guide openings of the neighbouring adapter plates are shaped as single through holes, wherein the adapter plates are provided with several corresponding through holes in order to vary the relative position of the adapter plates by changing the corresponding through holes. If the adapter plate is round, the through holes are arranged in an arcuate manner. If the adapter plate has a rectangular shape, the through holes are arranged in a line.

Alternatively, the round or rectangular adapter plate might be provided with slotted holes instead of single through holes as guide openings in order to provide a stepless adjustment of the offset angle and the offset distance respectively between the adapter plates.

The foregoing and other aspects will become apparent from the following detailed description of the invention when considered in conjunction with the enclosed drawings.

### Brief description of the drawings

- Figure 1: shows a cross-sectional side view A-A of an adapter plate assembly for connecting two machine parts one to another with two adapter plates,
- Figure 2: shows a top view of the adapter plate assembly of Figure 1 with two round-shaped adapter plates,
- Figure 3: shows a top view of another embodiment for a pair of round-shaped adapter plates with arcuate slotted holes,
- Figure 4a: shows a top view of a pair of round-shaped adapter plates with slotted holes for attaching the machine parts on it in a first embodiment,
- Figure 4b: shows a top view of a pair of round-shaped adapter plates with slotted holes for attaching the machine parts on it in a second embodiment,
- Figure 5: shows a side view of another adapter plate assembly for connecting two machine parts one to another with three adapter plates, and
- Figure 6: shows a top view of the adapter plate assembly of Figure 5 with square shaped adapter plates.

### Detailed description of the Figures

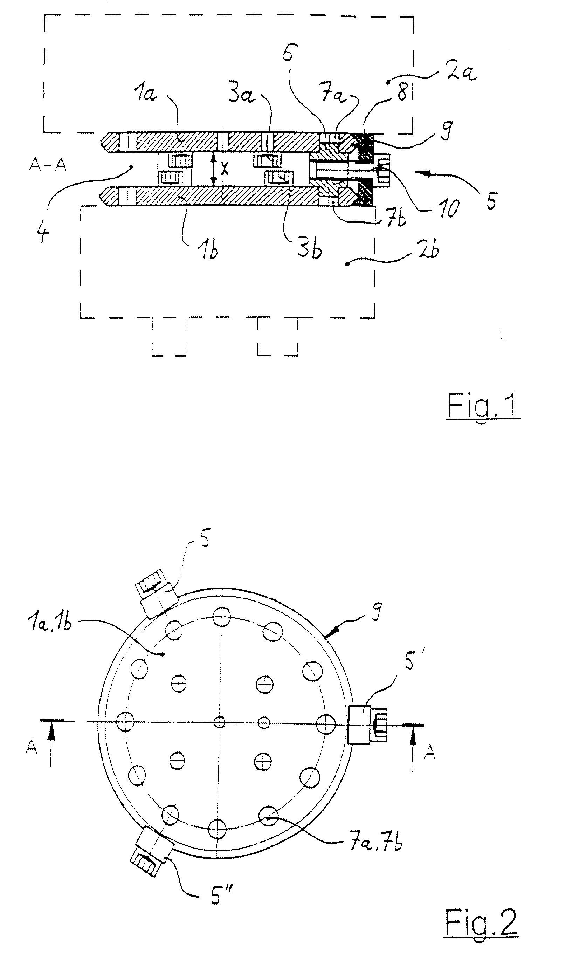

The adapter plate assembly as shown in Figure 1 comprises an upper adapter plate 1a which is attached to a corresponding machine part 2a by several screws 3a. Opposite to the upper adapter plate 1a a lower adapter plate 1b is arranged which is attached to a further machine part 2b by several screws 3b. The heads of screws 3a and 3b are arranged in a mounting gap 4 between both adapter plates 1a, 1b.

The adapter plates 1a and 1b are resolvable and adjustable attached onto one another by screw connecting means 5. The screw connecting means 5 are accommodated in the intermediate mounting gap 4 comprising a first crank block 6 corresponding to a pair of guide openings 7a and 7b arranged opposite one to another on the adapter plates 1a and 1b respectively. The first crank block 6 is provided with a threaded through hole extending parallel to the mounting gap 4. The first crank block 6 is provided with a thickness X in order to define the distance between the adjacent adapter plates 1a, 1b. Furthermore, a second crank block 8 is provided which corresponds to a peripheral flange section 9 of both adapter plates 1a, 1b in a form fitted manner. The prismatic shaped peripheral flange section 9 corresponds with two tail sections of the second crank block 8 in order to press the adapter plates 1a, 1b in the direction of the intermediate mounting gap 4 when turning the screw element 10. The second crank block 8 is provided with a through hole extending parallel to the mounting gap 4. Through the through hole of the second crank block 8 and the threaded through hole of the first crank block 6 the screw element 10 extends which is screwed in the threaded through hole of the first crank block 6 in order to attach the adapter plates 1a, 1b an therewith both machine parts 2a, 2b onto one another.

According to Figure 2 the adapter plates 1a, 1b are provided with a round, disk-like shape in order to adjust the offset angle relative to neighbouring adapter plates 1a and 1b by three screw connecting means 5, 5', 5". Therefore, the corresponding guide openings 7a, 7b of the neighbouring adapter plates 1a, 1b are shaped as several through holes. The adapter plates 1a, 1b are provided with a circle consisting of such arcuate arranged guide openings 7 in order to vary the relative offset angle between the adapter plates 1a, 1b by changing the corresponding guide openings 7 along the circle.

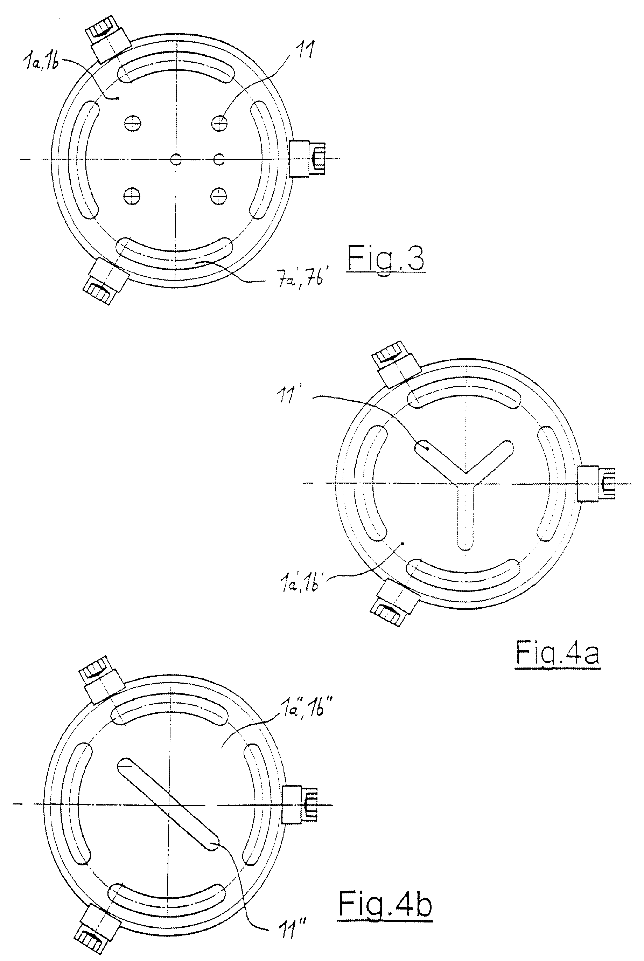

Another embodiment of the round, disk-like adapter plates 1a', 1b' is shown in Figure 3. The corresponding guide openings 7a', 7b' of the neighbouring adapter plates 1a, 1b are shaped as slotted holes in order to adjust the relative position of the adapter plates 1a, 1b. The corresponding - not shown - machine part is attached to the adapter plates by four through holes 11 arranged in the middle section of the adapter plates 1a, 1b.

According to the embodiment of Figure 4a a star-shaped, slotted hole arrangement 11' is provided for attaching the round, disk-like adapter plates 1a', 1b' to the - not shown - machine part. Figure 4b shows another embodiment wherein a single slotted hole 11" is arranged in the middle section of the adapter plates 1a", 1b".

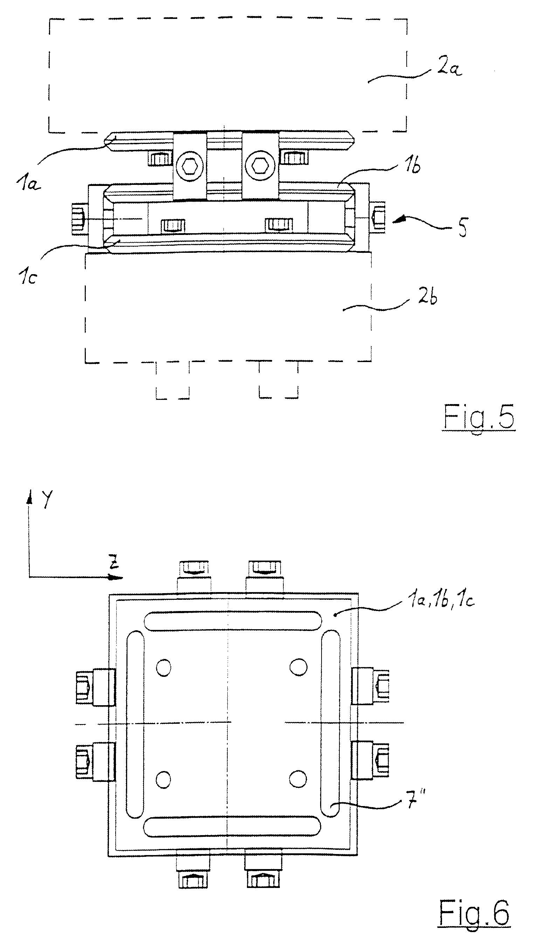

The embodiment according to Figure 5 shows another adapter plate assembly for connecting two machine parts 2a', 2b' one to another using three adapter plates 1a, 1b, 1c which are attached one to another by several connecting screw means 5.

According to Figure 6 the adapter plates 1a, 1b, 1c are provided with a square shape in order to adjust the offset distance relative to the - not shown - machine parts 2a, 2b in both lengthwise directions Y and Z. Therefore, the guide openings 7" are shaped as slotted holes.

The present invention is not limited by the embodiments described above which represented as examples only and can modified in various ways within the scope of protection defined by the appended claims. Thus it is possible to provide adapter plates in different shapes and with no bores or slotted holes for attaching the adapter plate to the machine part. In this case the user can easily drill his own bores or slotted holes for adapting to special machine parts, e.g. pneumatic linear drives or pneumatic rotary drives.

### Reference Signs

- 1: adapter plate
- 2: machine part
- 3: screw
- 4: mounting gap
- 5: screw connecting means
- 6: first crank block
- 7: guide opening
- 8: second crank block
- 9: flange section
- 10: screw element

## Claims

1. Adapter plate assembly, especially for mounting machine parts (2a, 2b) onto one another, comprising:
- at least two adapter plates (1a, 1b) arranged opposite one to another for connecting said machine parts (2a, 2b), whereby an intermediate mounting gap (4) between said corresponding adapter plates (1a, 1b) is provided,
- at least one screw connecting means (5) accommodated in said intermediate mounting gap (4) for connecting said adapter plates (1a, 1b) onto one another,
**characterized in that**, said screw connecting means comprise:
- a first crank block (6) corresponding to a pair of guide openings (7a, 7b) arranged opposite one to another on the adapter plates (1a, 1b) respectively, wherein the first crank block (6) is provided with a threaded through hole extending parallel to the mounting gap (4),
- a second crank block (8) corresponding to a peripheral flange section (9) of the adapter plates (1a, 1b) respectively in a form fitted manner, wherein the second crank block (8) is provided with a through hole extending parallel to the mounting gap (4), and
- a screw element (10) which extends through the through hole of the second crank block (8) and which is screwed in the threaded through hole of the first crank block (6) in order to attach the machine parts (2a, 2b) onto one another.

2. Adapter plate assembly according to claim 1,
**characterized in that** each adapter plate (1a, 1b) is provided with a prismatic shaped peripheral flange section (9) which corresponds with two opposite tail sections of the second crank block (8) in order to press the adapter plates (1a, 1b) in the direction of the intermediate mounting gap (4) when turning the screw element (10).

3. Adapter plate assembly according to claim 1,
**characterized in that**, the first crank block (6) is provided with a thickness (X) in order to define the distance between the adjacent adapter plates (1a, 1b).

4. Adapter plate assembly according to claim 1,
**characterized in that,** the adapter plates (1a', 1b') are provided with a round disk-like shape in order to adjust the offset angle relative to adjacent adapter plates (1a and 1b).

5. Adapter plate assembly according to claim 1,
**characterized in that,** the adapter plates (1a, 1b) are provided with a rectangular shape in order to adjust the offset distance of adjacent adapter plates (1a and 1b).

6. Adapter plate assembly according to claim 1,
**characterized in that**, the corresponding guide openings (7a, 7b) of the adjacent adapter plates (1a, 1b) are shaped as through holes in order to vary the relative position of the adapter plates (1a, 1b) by changing the corresponding guide openings (7a, 7b).

7. Adapter plate assembly according to claim 1,
**characterized in that**, the corresponding guide openings (7a', 7b') of the neighbouring adapter plates (1a, 1b) are shaped as slotted holes in order to adjust the relative position of the adapter plates (1a, 1b).

8. Adapter plate assembly according to claim 4 and 6 or 7,
**characterized in that**, the round adapter plate (1a', 1b') is provided with arcuate arranged slotted holes and several arcuate arranged through holes respectively as guide openings (7a, 7b; 7a', 7b') in order to provide an adjustment of the offset angle between the adapter plates (1a, 1b).

9. Adapter plate assembly according to one of the foregoing claims,
**characterized in that,** the corresponding adapter plates (1a, 1b; 1a', 1b') are provided with at least one through bore (11), threaded hole and/or slotted hole (11'; 11") for attaching the machine part (2a; 2b) to the adapter plate (1a; 1b) by screws.

10. Adapter plate assembly according to one of the foregoing claims,
**characterized in that**, the machine parts (2a, 2b) are pneumatic linear drives or pneumatic rotary drives.
